# EUROPEAN PATENT APPLICATION

(11) **EP 4 746 394 A1**
(43) Date of publication of application: **20.05.2026**
(21) Application number: 24919717.9
(22) Date of filing: 30.08.2024
(51) Int. Cl.: H04M 1/72454

(54) **METHOD FOR PERFORMING IN-POCKET DETECTION AND TERMINAL DEVICE**

(30) Priority: 26.01.2024 CN 202410116795
(71) Applicant: Huawei Technologies Co., Ltd., Shenzhen, Guangdong 518129 (CN)
(72) Inventor: PAN, Xingyu, Shenzhen, Guangdong 518129 (CN); ZHANG, Xinlei, Shenzhen, Guangdong 518129 (CN); WEI, Ye, Shenzhen, Guangdong 518129 (CN); WANG, Hongjun, Shenzhen, Guangdong 518129 (CN)
(74) Representative: Gill Jennings & Every LLP
(86) International application number: PCT/CN2024/115907
(87) International publication number: WO 2025/156636

(57) **Abstract**

This application relates to the field of terminal technologies, and provides a method for performing in-pocket detection and a terminal device. The method includes: detecting an acceleration waveform of a terminal device in a movement direction when a touchscreen is in a non-lock-screen state; determining an included angle between the movement direction and a direction of gravity when a peak of the acceleration waveform is greater than a first preset value and a full-duration-at-half-maximum of the acceleration waveform is within a preset range; and performing in-pocket detection when the included angle is less than a preset included angle. In the method, power consumption of the terminal device can be reduced, and user experience can be improved.

## Description

This application claims priority to Chinese Patent Application No. 202410116795.6, filed with the China National Intellectual Property Administration on January 26, 2024 and entitled "METHOD FOR PERFORMING IN-POCKET DETECTION AND TERMINAL DEVICE", which is incorporated herein by reference in its entirety.

### TECHNICAL FIELD

This application relates to the field of communication technologies, and in particular, to a method for performing in-pocket detection and a terminal device.

### BACKGROUND

With development of intelligent terminal technologies, capacitive touch panels (Touch Panel, TP) have been widely used in various terminal devices (such as mobile phones and tablet computers) that include touchscreens. A user may perform various operations on a touchscreen of a terminal device by using a finger. However, when using the terminal device, the user may often forget to lock the screen and directly put the terminal device in a non-lock-screen state into a pocket, for example, a trousers pocket. Because the pocket, for example, the trousers pocket, is close to a human body, mistouch may be triggered on the touchscreen in the non-lock-screen state, and the mistouch on the touchscreen may cause many adverse consequences (for example, an unintended call or an unintended message), affecting user experience.

In an existing mistouch prevention technology, to prevent mistouch on a terminal device in a non-lock-screen state in a pocket, the terminal device usually performs an in-pocket detection method in real time, to ensure that the terminal device in the non-lock-screen state can enable an auto-screen-lock function in a timely manner when being in the pocket, to lock a screen of the terminal. However, in this manner of in-pocket detection, power consumption of the terminal device clearly increases, affecting a battery life of the terminal device.

### SUMMARY

Embodiments of this application provide a method for performing in-pocket detection and a terminal device, to reduce power consumption of a terminal device and improve user experience. Embodiments of this application provide the following technical solutions.

According to a first aspect, a method for performing in-pocket detection is provided. The method includes: detecting an acceleration waveform of a terminal device in a movement direction when a touchscreen is in a non-lock-screen state; determining an included angle between the movement direction and a direction of gravity when a peak of the acceleration waveform is greater than a first preset value and a full-duration-at-half-maximum of the acceleration waveform is within a preset range; and performing in-pocket detection when the included angle is less than a preset included angle.

The foregoing method may be performed by a terminal device including a touchscreen, or may be performed by a module (for example, a processor, a chip, or a chip system) used in a terminal device, or may be implemented by a logic module or software that can implement all or some of functions of the terminal device. In comparison with a case in which power consumption of a terminal device increases due to an existing mistouch prevention technology, in this application, the acceleration waveform of the terminal device in the movement direction is first detected. The peak of the acceleration waveform being greater than the first preset value and the full-duration-at-half-maximum of the acceleration waveform being within the preset range indicates that the peak of the acceleration waveform is a pocketing peak (to be specific, an acceleration peak generated in the movement direction when the terminal device is put into a pocket). Then the included angle between the movement direction and the direction of gravity is further determined. The included angle being less than the preset included angle indicates that the terminal device has a pocketing trend of moving toward the direction of gravity. In this case, in-pocket detection is performed. This not only can avoid a waste of power of the terminal due to in-pocket detection in a non-pocketing scenario, but also can improve experience of using the terminal by a user.

In a possible implementation, before performing in-pocket detection, the method further includes: detecting a current posture of the terminal device; and performing in-pocket detection when the included angle is less than the preset included angle includes: performing in-pocket detection when the current posture is a target posture and the included angle is less than the preset included angle, where the target posture is a posture in which the top of the touchscreen faces down.

To improve accuracy of determining that the terminal device has a pocketing action, in some embodiments, the terminal device may determine, based on both the current posture and the included angle, whether the terminal device has a pocketing action, to reduce a probability of accidental triggering of in-pocket detection, and avoid a waste of power of the terminal due to ineffective in-pocket detection in a non-pocketing scenario.

In a possible implementation, performing in-pocket detection includes: obtaining N capacitance differences on the touchscreen, where the N capacitance differences are absolute values of differences between N raw capacitance values and a standard capacitance value, and N is a positive integer greater than 1; determining M capacitance differences from the N capacitance differences, where the M capacitance differences are capacitance differences greater than a capacitance threshold, and M is a positive integer less than N; when M is greater than a second preset value, clustering the M capacitance differences to obtain at least one clustering result; and processing the at least one clustering result by using a classifier, to determine whether the terminal device is in a pocket, where an output result of the classifier indicates whether the terminal device is in a pocket.

In comparison with a manner of directly determining, based on a quantity of reported capacitance points, whether the terminal device is in a pocket, in this application, the capacitance differences are first clustered, to remove a capacitance difference with a weak correlation and retain a clustering result of highly correlated capacitance differences. Then classification is performed on the clustering result of the highly correlated capacitance differences by using the classifier, to improve accuracy of determining, by the classifier, whether the terminal device is in a pocket.

In a possible implementation, performing in-pocket detection includes: detecting a status of an optical proximity sensor of the terminal device; and if the status is a blocked state, determining that the terminal device is in a pocket.

During normal use of the terminal device, the optical proximity sensor is usually in a non-blocked state. However, when the terminal device is in a pocket, a surrounding environment of the optical proximity sensor becomes dark, and the optical proximity sensor is in the blocked state. Therefore, the terminal device may quickly determine, depending on whether the optical proximity sensor is in the blocked state, whether the terminal device is in a pocket. This is highly efficient and accurate.

In a possible implementation, when the terminal device is in a pocket, the method further includes: entering a lock-screen state.

When the terminal device is in a pocket, the terminal may switch from the non-lock-screen state (for example, a screen-on state) to the lock-screen state, to prevent frequent mistouch on the touchscreen in the pocket, and avoid impact on user experience.

In a possible implementation, before entering the lock-screen state, the method further includes: recording duration in which the terminal device is in the pocket; and being in a mistouch prevention state within the duration when the duration is less than preset duration.

In some scenarios (for example, the user temporarily puts the terminal device like a mobile phone in a trousers pocket when washing hands), the user does not want the terminal device to enter the lock-screen state. In this case, the terminal device may record duration in which the terminal device is in the pocket. In a period of time in which the duration is less than the preset duration (for example, 1s), the terminal device may temporarily enter the mistouch prevention state instead of the lock-screen state. In this way, even if the user takes the terminal out of the pocket within a short time, the user can continue to use the terminal device without unlocking. This is convenient and secure.

In a possible implementation, after being in the mistouch prevention state within the duration, the method further includes: when the status of the optical proximity sensor of the terminal device is the non-blocked state, exiting the mistouch prevention state.

In some embodiments, when the terminal device is in a pocket, the terminal device is in the mistouch prevention state, and the optical proximity sensor is in the blocked state. The status of the optical proximity sensor being the non-blocked state indicates that the terminal device may have been taken out of the pocket. In this case, the terminal device may automatically exit the mistouch prevention state, to facilitate use by the user.

In a possible implementation, after being in the mistouch prevention state within the duration, the method further includes: when the current posture of the terminal device is a posture in which the top of the touchscreen faces up, exiting the mistouch prevention state.

In some embodiments, when the terminal device is in a pocket, the terminal device is in the mistouch prevention state, and the top of the touchscreen may be in a horizontal direction or toward the direction of gravity. The top of the touchscreen being in a posture of facing upward (or an upward posture) indicates that the terminal device may have been taken out of the pocket. In this case, the terminal device may automatically exit the mistouch prevention state, so that the user can continue to use the terminal device.

In a possible implementation, after being in the mistouch prevention state within the duration, the method further includes: when the terminal device leaves the pocket, exiting the mistouch prevention state in response to a gesture operation of the user.

In some embodiments, the terminal device is in the mistouch prevention state when being in a pocket. When the terminal device is taken out of the pocket, the user may perform a gesture operation (for example, quickly swiping up twice) on the touchscreen according to a use requirement of the user, to exit the mistouch prevention state. This operation of exiting the mistouch prevention state supports exiting according to a user requirement, and is convenient and flexible, with good user experience.

In a possible implementation, the method further includes: switching from the mistouch prevention state to the lock-screen state when the duration is greater than or equal to the preset duration.

In some scenarios, the duration being greater than or equal to the preset duration (for example, 1s) indicates that the user may temporarily not use the terminal device. The terminal device may switch from the mistouch prevention state to the lock-screen state, to turn off the touchscreen, reduce power consumption of the terminal, and avoid mistouch.

According to a second aspect, another method for performing in-pocket detection is provided. The method includes: determining an included angle between a movement direction of a terminal device and a direction of gravity when a touchscreen is in a non-lock-screen state; detecting an acceleration waveform of the terminal device in the movement direction when the included angle is less than a preset included angle; and performing in-pocket detection when a peak of the acceleration waveform is greater than a first preset value and a full-duration-at-half-maximum of the acceleration waveform is within a preset range.

The foregoing method may be performed by a terminal device including a touchscreen, or may be performed by a module (for example, a processor, a chip, or a chip system) used in a terminal device, or may be implemented by a logic module or software that can implement all or some of functions of the terminal device. In comparison with a case in which power consumption of a terminal device increases due to an existing mistouch prevention technology, in this application, whether the terminal device has a pocketing trend of moving toward the direction of gravity is first determined based on the included angle between the movement direction of the terminal device and the direction of gravity. Then the acceleration waveform of the terminal device in the movement direction is detected. The peak of the acceleration waveform being greater than the first preset value and the full-duration-at-half-maximum of the acceleration waveform being within the preset range indicates that the peak of the acceleration waveform is a pocketing peak (to be specific, an acceleration peak generated in the movement direction when the terminal device is put into a pocket). In this case, in-pocket detection is performed. This not only can avoid a waste of power of the terminal due to in-pocket detection in a non-pocketing scenario, but also can improve experience of using the terminal by a user.

In a possible implementation, before performing in-pocket detection, the method further includes: detecting a current posture of the terminal device; and performing in-pocket detection when the peak of the acceleration waveform is greater than the first preset value and the full-duration-at-half-maximum of the acceleration waveform is within the preset range includes: performing in-pocket detection when the current posture is a target posture, the peak of the acceleration waveform is greater than the first preset value, and the full-duration-at-half-maximum of the acceleration waveform is within the preset range, where the target posture is a posture in which the top of the touchscreen faces down.

To improve accuracy of determining that the terminal has a pocketing action, in some embodiments, the terminal device may determine, based on both the current posture and the acceleration waveform, whether the terminal device has a pocketing action, to reduce a probability of accidental triggering of in-pocket detection, and avoid a waste of power of the terminal due to ineffective in-pocket detection in a non-pocketing scenario.

In a possible implementation, performing in-pocket detection includes: obtaining N capacitance differences on the touchscreen, where the N capacitance differences are absolute values of differences between N raw capacitance values and a standard capacitance value, and N is a positive integer greater than 1; determining M capacitance differences from the N capacitance differences, where the M capacitance differences are capacitance differences greater than a capacitance threshold, and M is a positive integer less than N; when M is greater than a second preset value, clustering the M capacitance differences to obtain at least one clustering result; and processing the at least one clustering result by using a classifier, to determine whether the terminal device is in a pocket, where an output result of the classifier indicates whether the terminal device is in a pocket.

In comparison with a manner of directly determining, based on a quantity of reported capacitance points, whether the terminal device is in a pocket, in this application, the capacitance differences are first clustered, to remove a capacitance difference with a weak correlation and retain a clustering result of highly correlated capacitance differences. Then classification is performed on the clustering result of the highly correlated capacitance differences by using the classifier, to improve accuracy of determining, by the classifier, whether the terminal device is in a pocket.

In a possible implementation, performing in-pocket detection includes: detecting a status of an optical proximity sensor of the terminal device; and if the status is a blocked state, determining that the terminal device is in a pocket.

During normal use of the terminal device, the optical proximity sensor is usually in a non-blocked state. However, when the terminal device is in a pocket, a surrounding environment of the optical proximity sensor becomes dark, and the optical proximity sensor is in the blocked state. Therefore, the terminal device may quickly determine, depending on whether the optical proximity sensor is in the blocked state, whether the terminal device is in a pocket. This is highly efficient and accurate.

In a possible implementation, when the terminal device is in a pocket, the method further includes: entering a lock-screen state.

When the terminal device is in a pocket, the terminal may switch from the non-lock-screen state (for example, a screen-on state) to the lock-screen state, to prevent frequent mistouch on the touchscreen in the pocket, and avoid impact on user experience.

In a possible implementation, before entering the lock-screen state, the method further includes: recording duration in which the terminal device is in the pocket; and being in a mistouch prevention state within the duration when the duration is less than preset duration.

It can be learned that, in some scenarios (for example, the user temporarily puts the terminal device like a mobile phone in a trousers pocket when washing hands), the user does not want the terminal device to enter the lock-screen state. In this case, the terminal device may record duration in which the terminal device is in the pocket. In a period of time in which the duration is less than the preset duration (for example, 1s), the terminal device may temporarily enter the mistouch prevention state instead of the lock-screen state. In this way, even if the user takes the terminal out of the pocket within a short time, the user can continue to use the terminal device without unlocking. This is convenient and secure.

In a possible implementation, after being in the mistouch prevention state within the duration, the method further includes: when the status of the optical proximity sensor of the terminal device is the non-blocked state, exiting the mistouch prevention state.

In some embodiments, when the terminal device is in a pocket, the terminal device is in the mistouch prevention state, and the optical proximity sensor is in the blocked state. The status of the optical proximity sensor being the non-blocked state indicates that the terminal device may have been taken out of the pocket. In this case, the terminal device may automatically exit the mistouch prevention state, to facilitate use by the user.

In a possible implementation, after being in the mistouch prevention state within the duration, the method further includes: when the current posture of the terminal device is a posture in which the top of the touchscreen faces up, exiting the mistouch prevention state.

In some embodiments, when the terminal device is in a pocket, the terminal device is in the mistouch prevention state, and the top of the touchscreen may be in a horizontal direction or toward the direction of gravity. The top of the touchscreen being in a posture of facing upward (or an upward posture) indicates that the terminal device may have been taken out of the pocket. In this case, the terminal device may automatically exit the mistouch prevention state, so that the user can continue to use the terminal device.

In a possible implementation, after being in the mistouch prevention state within the duration, the method further includes: when the terminal device leaves the pocket, exiting the mistouch prevention state in response to a gesture operation of the user.

In some embodiments, the terminal device is in the mistouch prevention state when being in a pocket. When the terminal device is taken out of the pocket, the user may perform a gesture operation (for example, quickly swiping up twice) on the touchscreen according to a use requirement of the user, to exit the mistouch prevention state. This operation of exiting the mistouch prevention state supports exiting according to a user requirement, and is convenient and flexible, with good user experience.

In a possible implementation, the method further includes: switching from the mistouch prevention state to the lock-screen state when the duration is greater than or equal to the preset duration.

In some scenarios, the duration being greater than or equal to the preset duration (for example, 1s) indicates that the user may temporarily not use the terminal device. The terminal device may switch from the mistouch prevention state to the lock-screen state, to turn off the touchscreen, reduce power consumption of the terminal, and avoid mistouch.

According to a third aspect, an embodiment of this application provides a terminal device. The terminal device includes a processor and a memory. The memory is configured to store a computer program. The processor is configured to invoke the computer program from the memory and run the computer program, to enable the terminal device to perform the method according to any one of the first aspect or the implementations of the first aspect.

According to a fourth aspect, an embodiment of this application provides a terminal device. The terminal device includes a processor and a memory. The memory is configured to store a computer program. The processor is configured to invoke the computer program from the memory and run the computer program, to enable the terminal device to perform the method according to any one of the second aspect or the implementations of the second aspect.

According to a fifth aspect, an embodiment of this application provides a computer-readable storage medium. The computer-readable storage medium stores a computer program. When the computer program is executed by a processor, the processor is enabled to perform the method according to any one of the implementations of the first aspect.

According to a sixth aspect, an embodiment of this application provides a computer-readable storage medium. The computer-readable storage medium stores a computer program. When the computer program is executed by a processor, the processor is enabled to perform the method according to any one of the implementations of the second aspect.

According to a seventh aspect, an embodiment of this application provides a computer program product. The computer program product includes computer program code. When the computer program code is run by a terminal device, the terminal device is enabled to perform the method according to any one of the implementations of the first aspect.

According to an eighth aspect, an embodiment of this application provides a computer program product. The computer program product includes computer program code. When the computer program code is run by a terminal device, the terminal device is enabled to perform the method according to any one of the implementations of the second aspect.

According to a ninth aspect, an embodiment of this application provides a chip system. The chip system includes a processing circuit and a storage medium. The storage medium stores computer program instructions. When the computer program instructions are executed by the processing circuit, the method according to any one of the implementations of the first aspect is implemented.

Optionally, in the foregoing chip system, the processing circuit may be replaced with a processor, and the storage medium may be replaced with a memory. Optionally, the chip system may further include a communication interface, and the communication interface is configured to implement communication between the chip system and an external device.

According to a tenth aspect, an embodiment of this application provides a chip system. The chip system includes a processing circuit and a storage medium. The storage medium stores computer program instructions. When the computer program instructions are executed by the processing circuit, the method according to any one of the implementations of the second aspect is implemented.

Optionally, in the foregoing chip system, the processing circuit may be replaced with a processor, and the storage medium may be replaced with a memory. Optionally, the chip system may further include a communication interface, and the communication interface is configured to implement communication between the chip system and an external device.

For beneficial effects of the technical solutions in the third aspect to the tenth aspect of this application, refer to the beneficial effects of the technical solutions in the first aspect or the second aspect. Details are not described herein again.

### BRIEF DESCRIPTION OF DRAWINGS

FIG. 1 is a diagram of a structure of a terminal device 100 according to an embodiment of this application;
FIG. 2 is a diagram of a software structure of a terminal device 100 according to an embodiment of this application;
FIG. 3 is a schematic flowchart of a method 300 for performing in-pocket detection according to an embodiment of this application;
FIG. 4 is a diagram of creating a coordinate system according to an embodiment of this application;
FIG. 5 is a schematic flowchart of a method 500 for performing in-pocket detection according to an embodiment of this application;
FIG. 6A and FIG. 6B are a diagram of several capacitance characteristics of a terminal device in pockets made of different materials according to an embodiment of this application;
FIG. 7(a), FIG. 7(b), FIG. 7(c), and FIG. 7(d) are a diagram of setting a mistouch prevention mode according to an embodiment of this application;
FIG. 8(a), FIG. 8(b), FIG. 8(c), and FIG. 8(d) are a diagram in which a side of a terminal device includes a fingerprint unlock button according to an embodiment of this application;
FIG. 9 is a diagram of a terminal device in a pocket according to an embodiment of this application; and
FIG. 10 is a diagram of a structure of a terminal device according to an embodiment of this application.

### DESCRIPTION OF EMBODIMENTS

The following describes the technical solutions in embodiments of this application with reference to the accompanying drawings.

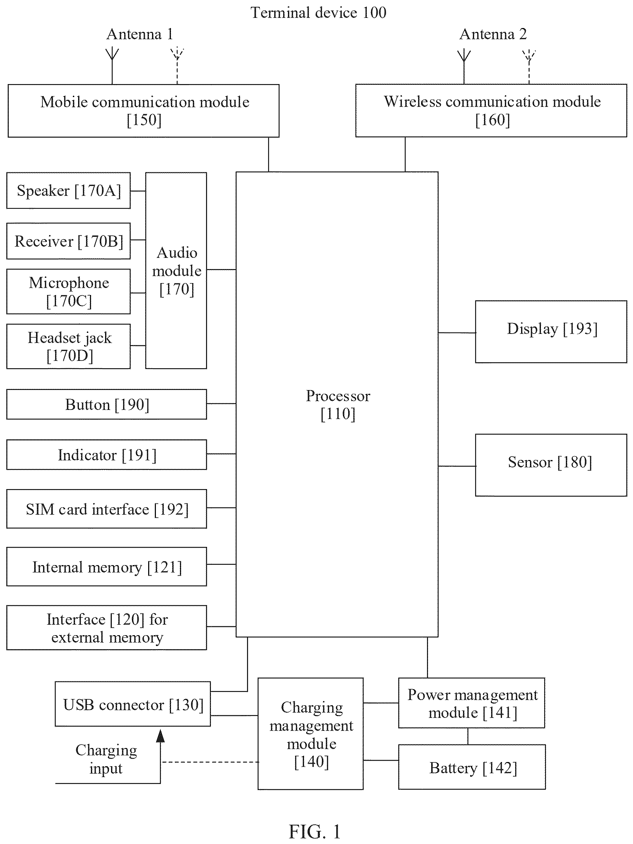

FIG. 1 is a diagram of a structure of a terminal device 100.

The terminal device 100 may include a mobile phone, a smartwatch, a smart player, a foldable electronic device, a tablet computer, or the like. A specific type of the terminal device 100 is not particularly limited in this embodiment of this application.

The terminal device 100 may include a processor 110, an interface 120 for external memory, an internal memory 121, a universal serial bus (universal serial bus, USB) connector 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor 180, a button 190, an indicator 191, and a subscriber identity module (subscriber identity module, SIM) card interface 192, a display 193, and the like.

It can be understood that the structure shown in this embodiment of this application does not constitute a specific limitation on the terminal device 100. In some other embodiments of this application, the terminal device 100 may include more or fewer components than those shown in FIG. 1, or some components may be combined, or some components may be split, or the components may be arranged differently. The components shown in FIG. 1 may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), or a controller. Different processing units may be independent components, or may be integrated into one or more processors.

The processor 110 may generate an operation control signal based on an instruction operation code and a timing signal, to control instruction fetching and instruction execution.

A memory may be further disposed in the processor 110 to store instructions and data. In some embodiments, the memory in the processor 110 may be a cache. The memory may store instructions or data that has been used or is frequently used by the processor 110. If the processor 110 needs to use the instructions or the data, the processor 110 may directly invoke the instructions or the data from the memory. This avoids repeated access, reduces waiting time of the processor 110, and therefore improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a subscriber identity module (subscriber identity module, SIM) interface, a universal serial bus (universal serial bus, USB) interface, and/or the like. The processor 110 may be connected to the following modules through at least one of the foregoing interfaces: a touch sensor, the audio module, the wireless communication module, the display, a camera, and the like.

It can be understood that an interface connection relationship between the modules shown in this embodiment of this application is merely an example for description, and does not constitute a limitation on the structure of the terminal device 100. In some other embodiments of this application, the terminal device 100 may alternatively use an interface connection mode different from that in the foregoing embodiment, or use a combination of a plurality of interface connection modes.

The USB connector 130 is an interface complying with a USB standard specification, and may be configured to connect the terminal device 100 to a peripheral device. The charging management module 140 is configured to receive a charging input from a charger. The charger may be a wireless charger or a wired charger. The power management module 141 is configured to connect to the battery 142, the charging management module 140, and the processor 110. The power management module 141 receives an input from the battery 142 and/or the charging management module 140, and supplies power to the processor 110, the internal memory 121, the display 193, the wireless communication module 160, and the like. In some other embodiments, the power management module 141 and the charging management module 140 may alternatively be disposed in a same component.

A wireless communication function of the terminal device 100 may be implemented by the antenna 1, the antenna 2, the mobile communication module 150, the wireless communication module 160, the modem processor, a baseband processor, and the like.

The mobile communication module 150 may provide a solution applied to the terminal device 100 for wireless communication such as 2G/3G/4G/5G. The mobile communication module 150 may include at least one filter, a switch, a power amplifier, a low noise amplifier (low noise amplifier, LNA), and the like. In some embodiments, at least some functional modules of the mobile communication module 150 may be disposed in a same component as at least some modules of the processor 110.

The modem processor may include a modulator and a demodulator. The modulator is configured to modulate a to-be-sent low-frequency baseband signal into a medium-high-frequency signal. The demodulator is configured to demodulate a received electromagnetic wave signal into a low-frequency baseband signal. Then the demodulator transmits the low-frequency baseband signal obtained through demodulation to the baseband processor for processing. The low-frequency baseband signal is processed by the baseband processor, and then a processed signal is transmitted to the application processor. The application processor outputs a sound signal through an audio device (not limited to the speaker 170A, the receiver 170B, and the like), or displays an image or a video through the display 193. In some embodiments, the modem processor may be an independent component. In some other embodiments, the modem processor may be independent of the processor 110, and is disposed in a same component as the mobile communication module 150 or another functional module.

The wireless communication module 160 may provide a solution applied to the terminal device 100 for wireless communication such as a wireless local area network (wireless local area network, WLAN) (for example, a wireless fidelity (wireless fidelity, Wi-Fi) network), Bluetooth (Bluetooth, BT), or a near field communication (near field communication, NFC) technology. In some embodiments, in the terminal device 100, the antenna 1 is coupled to the mobile communication module 150, and the antenna 2 is coupled to the wireless communication module 160, so that the terminal device 100 can communicate with a network and another terminal device by using a wireless communication technology. The wireless communication technology may include a global system for mobile communications (global system for mobile communications, GSM), a general packet radio service (general packet radio service, GPRS), code division multiple access (code division multiple access, CDMA), or the like.

The terminal device 100 may implement a display function through the GPU, the display 193, the application processor, and the like. The GPU is a microprocessor for image processing, and is connected to the display 193 and the application processor. The GPU is configured to perform mathematical and geometric computation for graphics rendering. The processor 110 may include one or more GPUs that execute program instructions to generate or change displayed information.

The interface 120 for external memory may be used for connecting an external memory card, for example, a microSD card, to extend a storage capability of the terminal device 100. The external memory card communicates with the processor 110 through the interface 120 for external memory, to implement a data storage function. For example, files such as music and videos are stored in the external memory card. Alternatively, files such as music and videos are transmitted from the terminal device to the external memory card.

The internal memory 121 may be configured to store computer-executable program code. The executable program code includes instructions. The internal memory 121 may include a program storage region and a data storage region. The program storage region may store an operating system, an application program needed by at least one function, and the like. The data storage region may store data created during use of the terminal device 100, and the like. In addition, the internal memory 121 may include a high-speed random access memory, or may include a non-volatile memory, for example, at least one magnetic disk storage device, a flash memory, or a universal flash storage (universal flash storage, UFS). The processor 110 runs the instructions stored in the internal memory 121 and/or instructions stored in the memory disposed in the processor, to implement various function methods or data processing of the terminal device 100.

The terminal device 100 may implement an audio function, for example, music playing, through the audio module 170, the speaker 170A, the receiver 170B, the microphone 170C, the headset jack 170D, the application processor, and the like.

The sensor 180 may include a pressure sensor, a gyroscope sensor, an acceleration sensor, an optical proximity sensor, an ambient light sensor, a touch sensor, and the like, and is configured to convert various signals from an external environment into an electrical signal or information in another needed form for output.

The pressure sensor is configured to sense a pressure signal, and may convert the pressure signal into an electrical signal. In some embodiments, the pressure sensor may be disposed in the display 193. There are many types of pressure sensors, for example, a resistive pressure sensor, an inductive pressure sensor, and a capacitive pressure sensor. The capacitive pressure sensor may include at least two parallel plates made of conductive materials. When a force is applied to the pressure sensor, capacitance between electrodes changes. The terminal device 100 determines pressure intensity based on the capacitance change. When a touch operation is performed on the display 193, the terminal device 100 detects intensity of the touch operation based on the pressure sensor, or may calculate a touch location based on a detection signal of the pressure sensor.

The gyroscope sensor may be configured to determine a motion attitude of the terminal device 100. In some embodiments, an angular velocity of the terminal device 100 around three axes (that is, axes x, y, and z) may be determined by using the gyroscope sensor.

The acceleration sensor may detect accelerations of the terminal device 100 in various directions (usually on three axes). When the terminal device 100 is still, a magnitude and a direction of gravity may be detected. The acceleration sensor may be further configured to recognize a posture of the terminal device, and is used in landscape/portrait mode switching or an application, for example, a pedometer.

The optical proximity sensor may include, for example, a light-emitting diode (LED) and an optical detector, for example, a photodiode. The light-emitting diode may be an infrared light-emitting diode. The terminal device 100 emits infrared light through the light-emitting diode. The terminal device 100 detects infrared reflected light from a nearby object through the photodiode. When detecting sufficient reflected light, the terminal device 100 may determine that an object exists near the terminal device 100. When detecting insufficient reflected light, the terminal device 100 may determine that no object exists near the terminal device 100. The terminal device 100 may detect, through the optical proximity sensor, whether the terminal is in a pocket, so that the terminal automatically unlocks or locks a screen.

The ambient light sensor is configured to sense luminance of ambient light. The ambient light sensor may further cooperate with the optical proximity sensor to detect whether the terminal device 100 is in a pocket, to avoid mistouch.

The touch sensor is also referred to as a "touch panel". The touch sensor may be disposed in the display 193. The touch sensor and the display 193 constitute a touchscreen, also referred to as a "touch screen". The touch sensor is configured to detect a touch operation performed on or near the touch sensor. The touch sensor may transmit the detected touch operation to the application processor to determine a type of a touch event. The display 193 may provide a visual output related to the touch operation. In some other embodiments, the touch sensor may alternatively be disposed on a surface of the terminal device 100 at a location different from a location of the display 193.

The button 190 may include a power button, a volume button, and the like. The button 190 may be a mechanical button or a touch button. The terminal device 100 may receive an input on the button, and generate a button signal input related to a user setting and function control of the terminal device 100.

The indicator 191 may be an indicator light, and may be configured to indicate a charging status and a battery level change, or may be configured to indicate a message, a missed call, a notification, and the like.

Optionally, the terminal device may further include the SIM card interface 192 for connecting a SIM card. The SIM card may be inserted into the SIM card interface 192 or removed from the SIM card interface 192, to implement contact with or separation from the terminal device 100. The terminal device 100 may support one or more SIM card interfaces 192. The SIM card interface 192 may support a nano-SIM card, a micro-SIM card, a SIM card, and the like. A plurality of cards may be inserted in a same SIM card interface 192 at the same time. The plurality of cards may be of a same type or different types. The SIM card interface 192 may also be compatible with different types of SIM cards. The SIM card interface 192 may also be compatible with an external memory card.

The display 193 is configured to display data such as a video interface and a user setting interface. For example, the display 193 may be configured to display information such as video content. The display 193 includes a display panel. The display panel may be a liquid crystal display (liquid crystal display, LCD), an organic light-emitting diode (organic light-emitting diode, OLED), an active-matrix organic light-emitting diode, or the like. In some embodiments, the display may be a foldable display or a flexible display.

The terminal device 100 may alternatively be implemented in another architecture. In embodiments of the present invention, a Harmony (Harmony) system may be further used as an example to describe a software architecture of the terminal device 100. It should be understood that the solutions provided in this application may also be applied to other types of operating systems such as an Android operating system, an Apple operating system, and a Windows operating system.

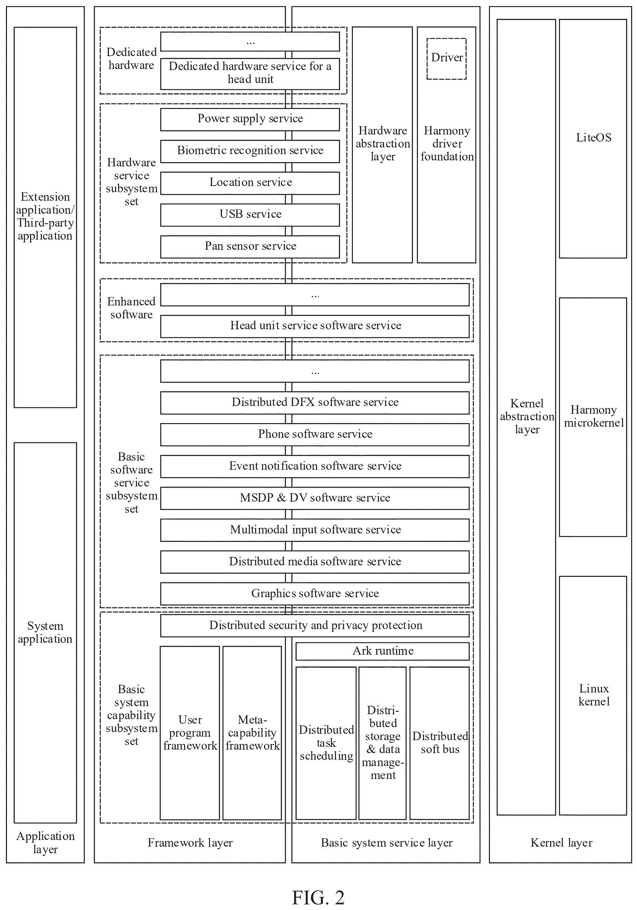

FIG. 2 is a diagram of a software structure of a terminal device 100 according to an embodiment of this application.

In some implementation solutions, the Harmony system includes four layers: a kernel layer, a basic system service layer, a framework layer, and an application layer from bottom to top.

The Harmony system uses a multi-kernel design, and optionally includes a Linux kernel, a Harmony microkernel, and a lightweight internet of things operating system (lite operating system, LiteOS) kernel. In this design, appropriate system kernels can be selected for devices with different device capabilities. The kernel layer further includes a kernel abstraction layer (kernel abstraction layer) that provides basic kernel capabilities for other Harmony layers, such as process management, thread management, memory management, file system management, network management, and peripheral management.

The basic system service layer is a core capability set of the Harmony system, and supports the Harmony system in providing a service for an application service through the framework layer in a multi-device deployment scenario. This layer optionally includes the following parts:

A basic system capability subsystem set provides basic capabilities for operations, such as running, scheduling, and migration, of a distributed application on a plurality of devices provided with the Harmony system, and includes a distributed soft bus, distributed data management and file management, distributed task scheduling, Ark runtime, distributed security and privacy protection, and the like. The Ark runtime provides C/C++/JavaScript multi-language runtime and a basic system class library, and also provides runtime for a Java program (to be specific, a part developed in a Java language in an application or at the framework layer) that is staticized by using an Ark compiler.

A basic software service subsystem set provides common and general-purpose software services for the Harmony system, and includes the following subsystems: graphics, distributed media, distributed AI, multimodal input, mobile sensing development platform (mobile sensing development platform, MSDP) & device virtualization (device virtualization, DV) technology, event notification, phone service, product-oriented non-functional attribute design (design for X, DFX), and the like. The basic software service subsystem set may be tailored based on deployment environments of different device forms. Each subsystem may be tailored at a granularity of a function.

An enhanced software service subsystem set (an enhanced software part indicated by a dashed-line box in FIG. 2) provides, for the Harmony system, differentiated capability-enhanced software services for different devices, and includes the following subsystems: tablet computer service software, HUAWEI Vision service software, head unit service software, internet of things (internet of things, IoT) service software, and the like. The enhanced software service subsystem set may be tailored at a granularity of a subsystem based on deployment environments of different device forms. Each subsystem may also be tailored at a granularity of a function.

A Harmony driver foundation (Harmony driver foundation, HDF) and a hardware abstraction layer (hardware abstraction layer, HAL) lay a foundation for an open hardware ecosystem of the Harmony system. They provide hardware capability abstraction for hardware in an upward direction, and provide development frameworks and running environments for various peripheral drivers in a downward direction.

A hardware service subsystem set provides common and adaptive hardware services for the Harmony system, and includes the following hardware service subsystems: pan sensor, location, power supply, USB, biometric recognition, and the like. The hardware service subsystem set can be tailored based on deployment environments of different device forms. Each subsystem may be tailored at a granularity of a function.

A dedicated hardware service subsystem (a dedicated hardware part indicated by a dashed-line box in FIG. 2) provides, for the Harmony system, differentiated hardware services for different devices, and optionally includes the following subsystems: a dedicated hardware service for a tablet computer, a dedicated hardware service for a head unit, a dedicated hardware service for a wearable, a dedicated hardware service for IoT, and the like. The dedicated hardware service subsystem may be tailored at a granularity of a subsystem. Each subsystem may be tailored at a granularity of a function.

The framework layer provides Java/C/C++/JavaScript multi-language user program frameworks and meta-capability frameworks for applications of the Harmony system, and multi-language framework application programming interfaces (application programming interface, API) for opening various software and hardware services.

The application layer includes system applications and third-party applications (or extension applications), and may include the following applications: Camera, Gallery, Calendar, Phone, a drawing application, Navigation, WLAN, Music, Video, Messages, and the like. In the Harmony system, applications are constructed based on an atomic ability (atomic ability, AA) and a feature ability (feature ability, FA).

A mobile phone of the structures shown in FIG. 1 and FIG. 2 is used below as an example to describe a processing process of the terminal device 100 with reference to a method for performing in-pocket detection in this application.

For example, a user is reading an e-book with a mobile phone when waiting at an airport, and the user casually puts the mobile phone in a non-lock-screen state into a pocket when hearing a check-in notification. In this case, an acceleration sensor of the mobile phone may detect an acceleration waveform of the mobile phone in a movement direction. A peak value of the acceleration waveform being greater than a first preset value and a full-duration-at-half-maximum being within a preset range indicates that a peak of the acceleration waveform is a pocketing peak. After determining the pocketing peak, the mobile phone determines an included angle between the movement direction and a direction of gravity. The included angle being less than a preset included angle indicates that the mobile phone has a pocketing trend of moving toward the direction of gravity. In this case, the mobile phone performs in-pocket detection. The mobile phone detects, through an optical proximity sensor of the mobile phone, whether an environment around the mobile phone becomes dark. When determining, based on a detected value of the optical proximity sensor, that the mobile phone is in a blocked state, the mobile phone may enter a mistouch prevention state or a lock-screen state. In some scenarios, if the mobile phone is in a pocket for a short time, the mobile phone may first enter the mistouch prevention state. For example, a mistouch prevention interface is generated (or displayed) on a touchscreen of the mobile phone, to avoid mistouch on the touchscreen. In other scenarios, if the mobile phone needs to be in a pocket for a long time, to avoid mistouch on the touchscreen, the mobile phone may enable an auto-screen-lock function to turn off the touchscreen, so that the mobile phone enters the lock-screen state. For details, refer to detailed descriptions in the following embodiments. Details are not described herein.

It should be noted that a terminal device to which the method is applicable is not limited to the software and hardware structures shown in FIG. 1 and FIG. 2. During actual application, the software and hardware system architectures shown in FIG. 1 and FIG. 2 may be modified based on a specific application scenario. This is not limited in this application.

It can be learned from the content described in the background that, in a scenario of mistouch in a pocket, a mistouch prevention technology can help a user implement auto-screen-lock for a terminal device (for example, a mobile phone) in a non-lock-screen state in a pocket, to avoid mistouch on a touchscreen. However, in an existing mistouch prevention technology, power consumption of a terminal device increases during in-pocket detection, affecting a battery life of the terminal device. In view of this, this application provides a method for performing in-pocket detection. In the method, power consumption of a terminal device can be reduced, and user experience can be improved.

Before the method for performing in-pocket detection in this application is described, an execution entity in embodiments of this application is first briefly described. A terminal device in this application may be of the structures shown in FIG. 1 and FIG. 2. For example, the terminal device may be a mobile phone or a foldable electronic device of the structures shown in FIG. 1 and FIG. 2, or may be a chip, a chip system, or a processor used in a terminal device, or may be a logic module or software that can implement all or some of functions of a terminal device.

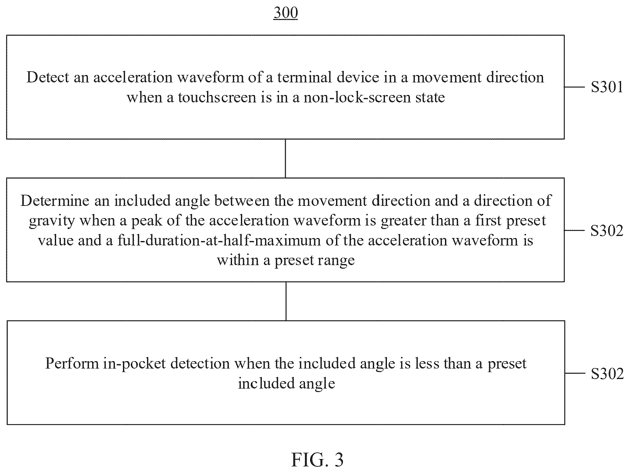

In the following embodiments, an example in which the execution entity of the method 300 for performing in-pocket detection is a terminal device including a touchscreen is used for description. FIG. 3 is a schematic flowchart of a method 300 for performing in-pocket detection according to an embodiment of this application. The method 300 includes S301 to S303. These steps are described in detail below.

S301: The terminal device detects an acceleration waveform of the terminal device in a movement direction when the touchscreen is in a non-lock-screen state.

It should be noted that, that the touchscreen is in the non-lock-screen state may alternatively be replaced with that the terminal device is in a non-lock-screen state, and that the touchscreen is in a lock-screen state may alternatively be replaced with that the terminal device is in a lock-screen state.

The lock-screen state indicates that the terminal device is in a locked state. When the terminal device is in the lock-screen state, the touchscreen (or a display) of the terminal device may be in an off (or screen-off) state or a screen-on state. In the lock-screen state, the terminal device is in an inoperable state. If a user wants to perform an operation on the terminal device, the user needs to unlock the screen before continuing to use the terminal device.

For example, when the terminal device is in the lock-screen state and the touchscreen is in the screen-on state, the user may view information, such as time and a date, displayed on the touchscreen, but the user cannot perform an operation on the terminal device. For another example, when the terminal device is in the lock-screen state and the touchscreen is in the screen-off state, the user can turn on the touchscreen by using a power button or the like, and view information, such as time and a date, displayed on the touchscreen, but the user cannot perform an operation on the terminal device either.

The non-lock-screen state (or referred to as an unlocked state) indicates that the terminal device is in a non-locked state. In the non-lock-screen state, the terminal device is in a normal operable state, and the user may directly perform various operations on the terminal device. When the terminal device is in the non-lock-screen state, the touchscreen of the terminal device may be in the screen-on state or the screen-off state (or the off state). For example, in the screen-off state, the terminal device is not locked, and when the user touches the touchscreen through a gesture operation (for example, a touch gesture), the touchscreen may be turned on. Then the user may directly perform an operation on the terminal device through a gesture operation without unlocking.

The movement direction is a direction in which the terminal device moves. The movement direction may be the same as the direction of gravity, or may be opposite to the direction of gravity, or may form a specific included angle with gravity (for example, the movement direction and the direction of gravity form an included angle of 60°).

In some implementations, the movement direction of the terminal device may be determined by establishing a coordinate system. For example, a three-dimensional rectangular coordinate system is established by using a location of the terminal device as an origin of coordinates, and the movement direction of the terminal device may be represented by a three-dimensional coordinate point in the coordinate system. The location may be a center point of a bezel of the terminal device, or may be a geometric center of the terminal device, or may be another location on the terminal device. This is not limited in this application. During actual application, a proper location may be selected from the terminal device as an origin of coordinates based on a specific case, to establish a coordinate system.

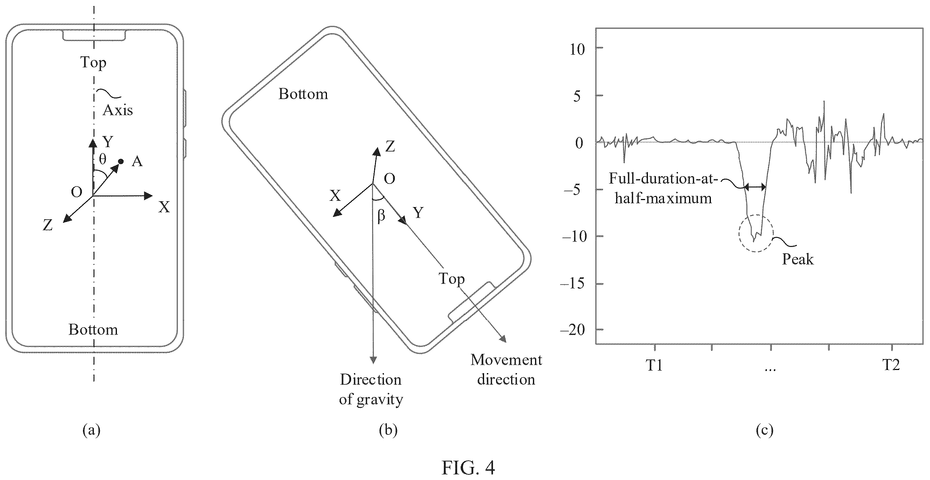

For example, as shown in (a) in FIG. 4, an XYZ rectangular coordinate system is established by using the geometric center O of the terminal device (for example, a mobile phone) as an origin of coordinates. A Y axis is along a direction of an axis of the terminal device, an X axis is perpendicular to the axis and is on a same plane as the Y axis, and a Z axis is perpendicular to an XOY plane. The top of the terminal device is in a positive direction of the Y axis, and the bottom is in a negative direction of the Y axis.

After the coordinate system is established, the terminal device may determine movement directions of the terminal device at different moments or within different duration based on a movement trajectory of the terminal device in the coordinate system. For example, as shown in (a) in FIG. 4, at a moment T1, the terminal device moves to a point A. In this case, a movement direction of the terminal device may be determined by calculating an included angle θ between a line segment OA and the positive direction of the Y axis. For another example, within duration from a moment T0 to the moment T1, the terminal device moves in the positive direction of the Y axis shown in (b) in FIG. 4. In this case, a movement direction of the terminal device is the positive direction of the Y axis.

It should be noted that, an acceleration of the terminal device in the movement direction may be decomposed to coordinate axes of the coordinate system. Different motion attitudes of the terminal device indicate that components, decomposed to the coordinate axes, of the acceleration of the terminal in the movement direction are different. For example, as shown in (b) in FIG. 4, the terminal device moves in the positive direction of the Y axis, and components, on the X axis and the Z axis, of an acceleration of the terminal device in the positive direction of the Y axis are 0. When detecting the acceleration waveform in the movement direction, the terminal device needs to detect only an acceleration waveform in the positive direction of the Y axis. In a pocketing scenario, the acceleration waveform in the positive direction of the Y axis usually has a clear peak. It should be noted that the acceleration waveform in the positive direction of the Y axis may also be considered as a linear acceleration sensor signal.

Usually, the terminal device may detect the acceleration waveform in the movement direction through an acceleration sensor carried in the terminal device. The acceleration sensor may be configured to detect acceleration waveforms of the terminal device in different directions (for example, on the coordinate axes of the coordinate system). In addition, when the terminal device is still, the acceleration sensor may be further configured to detect a magnitude and a direction of gravity. In addition, in some scenarios (for example, a landscape/portrait mode scenario), the acceleration sensor may be further configured to recognize a current posture of the terminal device. For example, the user puts the mobile phone into a trousers pocket within duration from T1 to T2. As shown in (b) in FIG. 4, when the user puts the terminal device into the trousers pocket in the positive direction of the Y axis, the acceleration sensor may detect an acceleration waveform in the positive direction of the Y axis. Because the terminal device has a pocketing action, the acceleration sensor of the terminal device may detect, within the duration from T1 to T2, that the acceleration waveform in the positive direction of the Y axis has a clear peak, as shown in (c) in FIG. 4.

S302: The terminal device determines an included angle between the movement direction and the direction of gravity when a peak of the acceleration waveform is greater than a first preset value and a full-duration-at-half-maximum of the acceleration waveform is within a preset range.

The first preset value may range from -5 m/s² to -15 m/s², or the like. The preset range may range from 5 milliseconds to 30 milliseconds, or the like. Values of the first preset value and the preset range may be set based on an actual application scenario. This is not limited in this application.

When the terminal device detects an acceleration waveform of the terminal device in a specific movement direction, the terminal device continues to detect a peak and a full-duration-at-half-maximum of the acceleration waveform. For example, when detecting that a derivative of an acceleration in a sliding window within a period of time changes from a negative number to a positive number, the terminal device determines that a peak appears within the period of time. Then the terminal device extracts a detected value of the peak, and determines a full-duration-at-half-maximum. The peak of the acceleration waveform being greater than the first preset value and the full-duration-at-half-maximum of the acceleration waveform being within the preset range indicates that the peak of the acceleration waveform is a pocketing peak, and also indicates that the terminal device may have a pocketing action. The pocketing peak is an acceleration peak generated in a movement direction when the terminal device is put into a pocket. If detecting the pocketing peak, the terminal device may determine that the terminal device may currently have a pocketing action.

In this case, to further determine that the terminal device has a pocketing action, the terminal device may obtain a detected value of gravity (for example, a gravity vector or a gravity acceleration value in the coordinate system) through a gravity sensor of the terminal device, and obtain a detected value of motion (for example, a motion vector or a motion coordinate in the coordinate system) through a motion sensor (for example, the acceleration sensor) of the terminal device. The terminal device calculates an included angle based on the detected value of gravity and the detected value of motion.

For example, as shown in (b) in FIG. 4, when the user puts the terminal device into the pocket in the positive direction of the Y axis, the movement direction of the terminal device is the positive direction of the Y axis. In this case, the acceleration sensor of the terminal device may detect an acceleration of the terminal device in the positive direction of the Y axis, and may detect an acceleration waveform with a peak within the duration from T1 to T2. The terminal device obtains a peak (or a wave peak value or a peak value) and a full-duration-at-half-maximum of the acceleration waveform. When the peak of the acceleration waveform is greater than the first preset value and the full-duration-at-half-maximum of the acceleration waveform is within the preset range, the terminal device may determine that the peak of the acceleration is a pocketing peak. Then the terminal device obtains a detected value of motion through the acceleration sensor of the terminal device, obtains a detected value of gravity through the gravity acceleration sensor of the terminal device, and calculates an included angle between the detected value of motion and the detected value of gravity based on a cosine formula. For example, the included angle may be 30° or 60°. It should be noted that, when the terminal device obtains the motion vector through the acceleration sensor and obtains the gravity vector through the gravity acceleration sensor, the terminal device may obtain the included angle between the movement direction and the direction of gravity by multiplying the motion vector by the gravity vector.

S303: The terminal device performs in-pocket detection when the included angle is less than a preset included angle.

The preset included angle may be 90°, 60°, or the like. During actual application, the preset included angle may be set based on a specific application scenario. This is not limited in this application.

The included angle being less than the preset included angle indicates that the movement direction of the terminal device faces the direction of gravity. Because the terminal device generates the pocketing peak in the movement direction and moves toward the direction of gravity, the terminal device may determine that the terminal device has a pocketing action. In this case, the terminal device enables in-pocket detection to determine whether the terminal device is in a pocket and whether the terminal device needs to enter the lock-screen state. The in-pocket detection may be a series of detection processes performed by the terminal device when the terminal device determines whether the terminal device is in a pocket (for example, the terminal device determines whether the terminal device is in a pocket, when the terminal device leaves the pocket, when the terminal device enters or exits a mistouch prevention state, and when the terminal device enters the lock-screen state). For example, the terminal device may determine, based on a blocking status of an optical proximity sensor, a quantity of reported capacitance points, an average value of capacitance differences, or the like, whether the terminal device is in a pocket. When determining that the terminal device is in a pocket, the terminal device may enable an auto-screen-lock function, so that the terminal enters the lock-screen state, to avoid frequent mistouch on the touchscreen in the pocket.

To sum up, in comparison with a case in which power consumption of a terminal increases due to an existing mistouch prevention technology, in this application, the acceleration waveform of the terminal device in the movement direction is first detected. The peak of the acceleration waveform being greater than the first preset value and the full-duration-at-half-maximum of the acceleration waveform being within the preset range indicates that the peak of the acceleration waveform is a pocketing peak (to be specific, an acceleration peak generated in the movement direction when the terminal device is put into a pocket). Then the included angle between the movement direction and the direction of gravity is further determined. The included angle being less than the preset included angle indicates that the terminal device has a pocketing trend of moving toward the direction of gravity. In this case, in-pocket detection is performed. This not only can avoid a waste of power of the terminal due to in-pocket detection in a non-pocketing scenario, but also can improve experience of using the terminal by a user.

It should be noted that, in some embodiments, before the terminal device performs in-pocket detection, the method 300 further includes: The terminal device detects a current posture of the terminal device; and the terminal device performs in-pocket detection when the current posture is a target posture and the included angle is less than the preset included angle, where the target posture is a posture in which the top of the touchscreen faces down.

The current posture of the terminal device may be obtained through an attitude (or location) sensor (for example, at least one of the acceleration sensor, a gyroscope sensor, or a magnetometer sensor) of the terminal device. The terminal device may obtain the current posture of the terminal device by performing an operation on a detected value of the attitude sensor and a detected value of the motion sensor. The current posture being the posture in which the top of the touchscreen faces down (that is, the target posture) indicates that the terminal device has a trend of moving toward the direction of gravity. In addition, because the terminal device has detected the pocketing peak, when the terminal device determines that the current posture is the target posture and the included angle is less than the preset included angle, the terminal device may determine that the terminal device has a pocketing action. In this case, the terminal device may enable in-pocket detection.

It can be learned that, to improve accuracy of determining that the terminal device has a pocketing action, in some embodiments, the terminal device determines, based on both the current posture and the included angle, whether the terminal device has a pocketing action, to reduce a probability of accidental triggering of in-pocket detection, and avoid a waste of power of the terminal.

It should be further noted that, in some other embodiments, before performing in-pocket detection, the terminal device may further determine whether an included angle between the movement direction and a preset coordinate axis is less than a preset value, to help determine whether the movement direction of the terminal device faces the direction of gravity. The preset value may be 60°, 90°, or the like. The step of determining, by the terminal device, the included angle between the movement direction and the preset coordinate axis may or may not be performed simultaneously with either of S301 and S302. This is not limited in this application. For example, determining, by the terminal device, the included angle between the movement direction and the preset coordinate axis may be performed simultaneously with S301, after S301, simultaneously with S302, or after S302, or may be performed simultaneously or sequentially with the step of detecting, by the terminal device, the current posture of the terminal device. This is not limited in this application.

Selection of the preset coordinate axis depends on establishment of a coordinate system. Usually, a coordinate axis, in the coordinate system, whose positive direction has an included angle of less than 90° with the direction of gravity is selected as the preset coordinate axis. For example, as shown in (b) in FIG. 4, the preset coordinate axis may be the positive direction of the Y axis. Because an included angle β between the positive direction of the Y axis and the direction of gravity is less than 90°, the terminal device may determine whether an included angle between the positive direction of the Y axis and the movement direction is less than a preset value (for example, 90°), to further determine whether the terminal device is moving toward the direction of gravity during movement. For example, when the included angle between the positive direction of the Y axis and the movement direction is less than the preset value 90°, the terminal device determines that the terminal device is moving toward the direction of gravity. When the included angle between the positive direction of the Y axis and the movement direction is greater than or equal to the preset value 90°, the terminal device determines that the terminal device is not moving toward the direction of gravity (for example, may be moving toward a horizontal direction perpendicular to the direction of gravity, or moving toward a direction opposite to the direction of gravity). The terminal device may exclude some non-pocketing scenarios depending on whether the included angle between the movement direction and the preset coordinate axis is less than the preset value, to improve accuracy of determining, by the terminal device, whether to perform in-pocket detection.

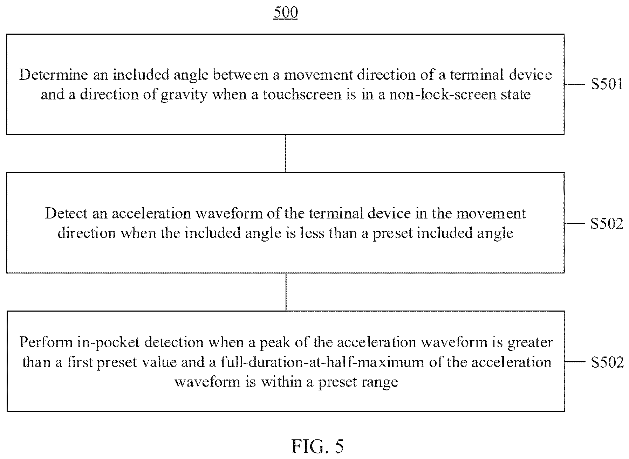

The foregoing describes the method 300 for performing in-pocket detection. In the method 300, power consumption of the terminal device can be reduced, and user experience can be improved. The following further describes a method 500 for performing in-pocket detection, as shown in FIG. 5. In the method 500, power consumption of a terminal device can also be reduced, and user experience can be improved. An execution entity of the method 500 is similar to the execution entity of the method 300. For details, refer to the descriptions of the execution entity in the method 300. Details are not described herein again. The method 500 includes S501 to S503. These steps are described in detail below.

S501: A terminal device determines an included angle between a movement direction of the terminal device and a direction of gravity when a touchscreen is in a non-lock-screen state.

For determining, by the terminal device, the included angle between the movement direction of the terminal device and the direction of gravity, refer to related descriptions of step S302. Details are not described herein again.

It should be noted that a difference from the method 300 lies in: In the method 500, when the touchscreen is in the non-lock-screen state, the terminal device first excludes some non-pocketing scenarios based on the included angle between the movement direction of the terminal device and the direction of gravity, to avoid a waste of power of the terminal due to ineffective in-pocket detection in a non-pocketing scenario.

S502: The terminal device detects an acceleration waveform of the terminal device in the movement direction when the included angle is less than a preset included angle.

For detecting, by the terminal device, the acceleration waveform of the terminal device in the movement direction, refer to related descriptions of step S301. Details are not described herein again.

The terminal device determining that the included angle is less than the preset included angle indicates that the terminal device has a trend of moving toward the direction of gravity. In this case, the terminal device detects the acceleration waveform of the terminal device in the movement direction.

S503: The terminal device performs in-pocket detection when a peak of the acceleration waveform is greater than a first preset value and a full-duration-at-half-maximum of the acceleration waveform is within a preset range.

The peak of the acceleration waveform being greater than the first preset value and the full-duration-at-half-maximum of the acceleration waveform being within the preset range indicates that the terminal device generates a pocketing peak in the movement direction. In addition, because the terminal device has the trend of moving toward the direction of gravity, the terminal device may determine that the terminal device has a pocketing action. In this case, the terminal device may enable in-pocket detection, to determine whether the terminal device is in a pocket and whether the terminal device needs to enter a lock-screen state. For details, refer to related descriptions of S303. Details are not described herein again.

It should be noted that the terminal device may perform the method 300 or the method 500 within preset duration or within a preset sliding time window. A starting moment of the preset duration may be a moment at which the terminal device detects that an acceleration exists in the movement direction. Duration of the preset duration may be set based on an actual case, for example, is 2 seconds or 3 seconds. This is not limited in this application. Total duration of the sliding time window may be 1 second, 2 seconds, or the like. A starting moment of the sliding time window may be a preset moment after power-on of the terminal device. The terminal device detects, within the preset sliding time window at intervals, whether the terminal device has an acceleration in the movement direction of the terminal device. In comparison with a manner in which the terminal device determines, based on an acceleration value detected at a specific moment, whether the terminal device has a pocketing action, in this application, a manner in which the terminal device performs determining on a pocketing action by detecting a change in a motion parameter (for example, an acceleration waveform or an included angle) of the terminal device within a period of time (or preset duration) is more accurate.

In comparison with a case in which power consumption of a terminal increases due to an existing mistouch prevention technology, in the method 500, whether the terminal device has a pocketing trend of moving toward the direction of gravity is first determined based on the included angle between the movement direction of the terminal device and the direction of gravity. Then the acceleration waveform of the terminal device in the movement direction is detected. The peak of the acceleration waveform being greater than the first preset value and the full-duration-at-half-maximum of the acceleration waveform being within the preset range indicates that the peak of the acceleration waveform is a pocketing peak. In this case, in-pocket detection is performed. This not only can avoid a waste of power of the terminal due to in-pocket detection in a non-pocketing scenario, but also can improve experience of using the terminal by a user.

In some embodiments, before the terminal device performs in-pocket detection, the method 500 further includes: The terminal device detects a current posture of the terminal device; and the terminal device performs in-pocket detection when the current posture is a target posture, the peak of the acceleration waveform is greater than the first preset value, and the full-duration-at-half-maximum of the acceleration waveform is within the preset range, where the target posture is a posture in which the top of the touchscreen faces down.

It should be noted that, for obtaining, by the terminal device, the current posture of the terminal device, reference may be made to the foregoing related descriptions, and details are not described herein again. The current posture being the posture in which the top of the touchscreen faces down (or the top of the touchscreen is higher than the top) (that is, the target posture) indicates that the terminal device has a trend of moving toward the direction of gravity. In addition, the terminal device determines, based on the peak of the acceleration waveform being greater than the first preset value and the full-duration-at-half-maximum of the acceleration waveform being within the preset range, that the peak of the acceleration waveform is a pocketing peak. Therefore, the terminal device may determine that the terminal device has a pocketing action. In this case, the terminal device may enable in-pocket detection.

It can be learned that, to improve accuracy of determining that the terminal has a pocketing action, in some embodiments, the terminal device may determine, based on both the current posture and the pocketing peak, whether the terminal device has a pocketing action, to reduce a probability of accidental triggering of in-pocket detection.

In the method 300 and the method 500, a method for determining, by the terminal device, to perform in-pocket detection is described. The following continues to describe a specific method for performing in-pocket detection by the terminal device in the method 300 and the method 500.

In some embodiments, that the terminal device performs in-pocket detection includes: The terminal device obtains N capacitance differences on the touchscreen, where the N capacitance differences are absolute values of differences between N raw capacitance values and a standard capacitance value, and N is a positive integer greater than 1. The terminal device determines M capacitance differences from the N capacitance differences, where the M capacitance differences are capacitance differences greater than a capacitance threshold, and M is a positive integer less than N. When M is greater than a second preset value, the terminal device clusters the M capacitance differences to obtain at least one clustering result. Finally, the terminal device processes the at least one clustering result by using a classifier, to determine whether the terminal device is in a pocket, where an output result of the classifier may indicate whether the terminal device is in a pocket.

It should be noted that the raw capacitance value may be a capacitance value generated when a capacitive node is touched, and the raw capacitance value decreases with an increase in touch intensity. The standard capacitance value is usually a preset value. For example, the standard capacitance value is 8000 or 12000. Usually, the raw capacitance value is less than the standard capacitance value. For example, when a capacitive node A is not touched, the raw capacitance value is 8000, and the standard capacitance value is 8000. After a finger touches the capacitive node A, the raw capacitance value of the capacitive node A is 7000, and a capacitance difference of the capacitive node A is 1000 (to be specific, the standard capacitance value - the raw capacitance value = 8000 - 7000).

The capacitance threshold may be 400, 600, or the like, and the second preset value may be 300, 400, or the like. During actual application, the capacitance threshold and the second preset value may be set based on a specific scenario. This is not limited in this application.

When the terminal device is in a pocket, a capacitance characteristic of the touchscreen changes. Therefore, whether the terminal device is in a pocket may be determined based on the capacitance characteristic (for example, the capacitance difference) of the touchscreen. For example, the terminal device may obtain the N capacitance differences on the touchscreen, separately compare the N capacitance differences with the capacitance threshold, and then determine the M capacitance differences from the N capacitance differences, where the M capacitance differences are greater than the capacitance threshold. To improve accuracy of a classification result, the terminal device first clusters the M capacitance differences by using a clustering algorithm (for example, a K-means (K-means) algorithm), to obtain the at least one clustering result. It should be noted that, when the terminal device is in pockets made of different materials, capacitance characteristics (for example, capacitance differences) on the touchscreen are different. For example, when the terminal device is put into a pocket made of a specific material, capacitance differences in a plurality of regions on the touchscreen are positive. When the terminal device clusters capacitance differences on the touchscreen in the pocket made of the material, a plurality of clustering results are obtained. However, when the terminal device is put into a packet made of another material, only a capacitance difference in one region is positive. When the terminal device clusters capacitance differences on the touchscreen in the pocket made of the material, one clustering result is obtained. The terminal device may aggregate highly associated (or correlated) capacitance differences by using the clustering algorithm, to accurately indicate capacitance characteristics of the touchscreen in pockets made of different materials. Finally, the terminal device performs feature extraction and classification on the at least one clustering result by using the trained classifier to obtain the output result, and then determines, based on the output result, whether the terminal device is in a pocket. It should be noted that, during actual application, the trained classifier may determine, based on capacitance differences reported by the terminal device in pockets made of different materials, whether the terminal device is in a pocket.

It should be noted that, during training of the classifier, a training set may be capacitance differences generated when the terminal device is put into pockets made of different materials, or a clustering result of capacitance differences generated when the terminal device is put into pockets made of different materials. The clustering result may be a result obtained by processing, by using the clustering algorithm, the capacitance differences generated when the terminal device is put into pockets made of different materials. During the training, if the training set is a clustering result obtained when the terminal device is put into pockets made of different materials, the classifier may determine information, such as a clustering area and a clustering location, based on the clustering result, to determine capacitance characteristics of the terminal device in the pockets made of different materials. After the training, the classifier may determine a corresponding capacitance characteristic (for example, a clustering area or a clustering location) based on the capacitance differences (or the clustering result) obtained when the terminal device is input into the pockets made of different materials, to determine whether the terminal device is put into a pocket made of a corresponding material. Therefore, after the classifier is trained, the terminal device may perform recognition, by using the classifier, on a clustering result obtained after the terminal device is put into a pocket made of a specific material, to determine whether the terminal device is in a pocket made of the material.

It should be noted that the classifier may be a support vector machine (support vector machine, SVM) classifier or another lightweight classifier. This is not limited in this application. In addition, during the training of the classifier, the training set may alternatively be extended to capacitance differences or clustering results obtained when the terminal device is in pockets with different shapes and different thicknesses. For example, the training set includes a capacitance difference in a square thick jeans pocket and a capacitance difference in a round thin jeans pocket. After the classifier is trained by using the training set, the classifier may determine whether the terminal device is in different types of pockets (for example, pockets made of different materials and with different thicknesses, or pockets made of different materials and in different shapes).

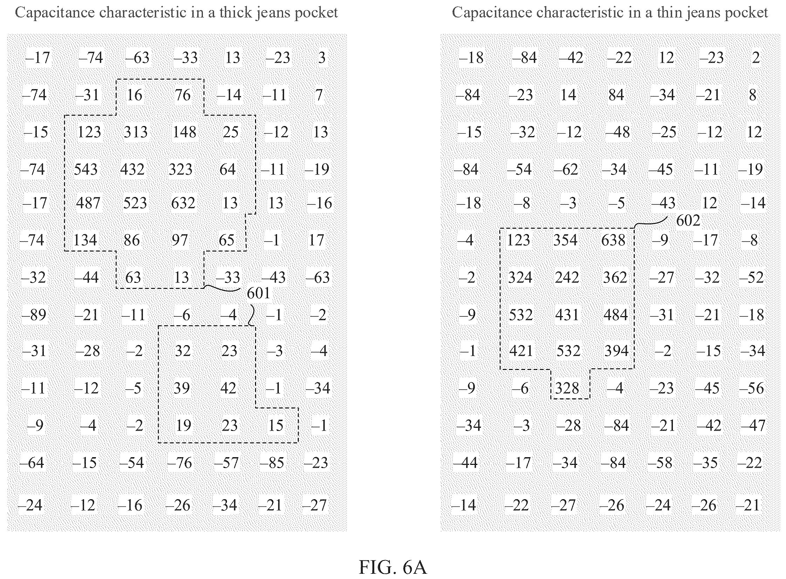

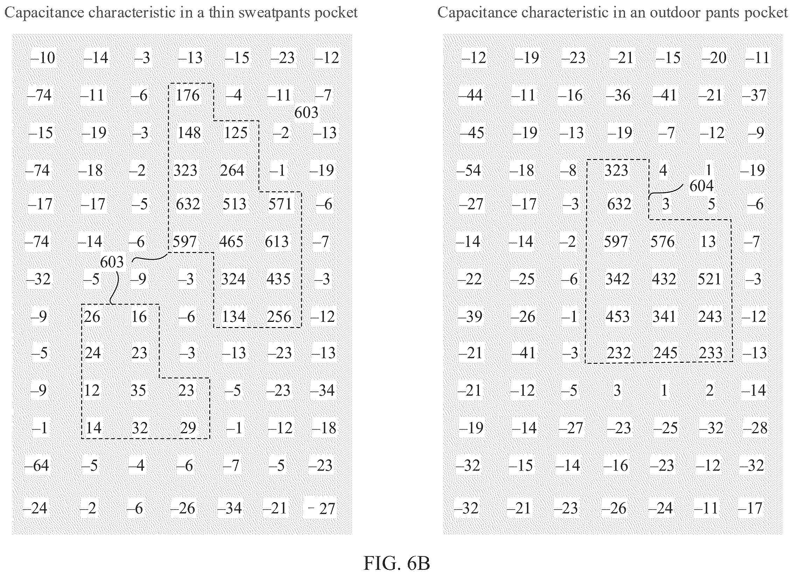

FIG. 6A and FIG. 6B show several capacitance characteristics of the terminal device in pockets made of different materials. It can be learned from FIG. 6A and FIG. 6B that the capacitance characteristics of the terminal device in the pockets made of different materials are different. That is, capacitance differences are different (or clustering results are different). For example, a capacitance characteristic 601 of the terminal device in a thick jeans pocket, a capacitance characteristic 602 of the terminal device in a thin jeans pocket, a capacitance characteristic 603 of the terminal device in a thin sweatpants pocket, and a capacitance characteristic 604 of the terminal device in an outdoor pants pocket are clearly different. The capacitance characteristic includes but is not limited to an average capacitance difference, a clustering area, and a clustering location of capacitance differences. It should be noted that, in some scenarios in which the terminal device is held in a landscape mode for playing a game, some clustering results are on the top of the touchscreen, and some clustering results are on the bottom of the touchscreen. However, in a pocketing scenario, a distance between a plurality of clustering results is usually short. For example, it can be learned from FIG. 6A and FIG. 6B that the capacitance characteristic 601 has two clustering results, and a distance between the two clustering results is short.

It can be learned that, in comparison with a manner of directly determining, based on a quantity of reported capacitance points, whether the terminal is in a pocket, in this application, the capacitance differences are first clustered, to remove a capacitance difference with a weak correlation and retain a clustering result of highly correlated capacitance differences. Then classification is performed on the clustering result of the highly correlated capacitance differences by using the classifier, to improve accuracy of determining, by the classifier, whether the terminal device is in a pocket.

In some embodiments, that the terminal device performs in-pocket detection includes: The terminal device detects a status of the optical proximity sensor of the terminal device, and if the status is a blocked state, determines that the terminal device is in a pocket.

Usually, the status of the optical proximity sensor includes the blocked state and a non-blocked state. The terminal device determines, depending on whether the optical proximity sensor is blocked, whether the terminal device is in a pocket. During normal use of the terminal device, the optical proximity sensor is usually in the non-blocked state. However, when the terminal device is in a pocket, a surrounding environment of the optical proximity sensor becomes dark, and the optical proximity sensor is in the blocked state. Therefore, the terminal device may quickly determine, depending on whether the optical proximity sensor is in the blocked state, whether the terminal device is in a pocket. This is highly efficient and accurate.

In some embodiments, when the terminal device is in a pocket, the method 300 (or the method 500) further includes: The terminal device enters the lock-screen state.

Regardless of whether the optical proximity sensor, capacitance differences, or another manner is used, when determining that the terminal device is in a pocket, the terminal device may enable a lock-screen function, to switch the terminal device from the non-lock-screen state to the lock-screen state, to prevent mistouch on the touchscreen in the pocket, and avoid impact on a battery life of the terminal and user experience. A reason why the battery life of the terminal is affected lies in: Due to frequent mistouch on the terminal device in the non-lock-screen state in the pocket, the touchscreen frequently receives touch events, and cannot enter the screen-off/screen-lock state, affecting the battery life of the terminal.

In some embodiments, before the terminal device enters the lock-screen state, the method 300 (or the method 500) further includes: The terminal device records duration in which the terminal device is in the pocket, and enters the mistouch prevention state when the duration is less than preset duration.

The duration may be 800 milliseconds, 1 second, 2 seconds, or the like, and the preset duration may be 1 second, 2 seconds, or the like. The duration and the preset duration may be set based on an actual case. This is not limited in this application.

When detecting that the terminal device is in a pocket, the terminal device starts to record duration in which the terminal device is in the pocket. In a period of time in which the duration is less than the preset duration, the terminal device may temporarily not enable the lock-screen function, but first switch from the non-lock-screen state to the mistouch prevention state (or a mistouch prevention mode). For example, the terminal device generates a mistouch prevention interface on the touchscreen, to avoid accidental triggering of the terminal device in the pocket. It should be noted that the mistouch prevention interface is usually at the top of all interface layers on the terminal device, to block reporting of mistouch on the touchscreen in the pocket.

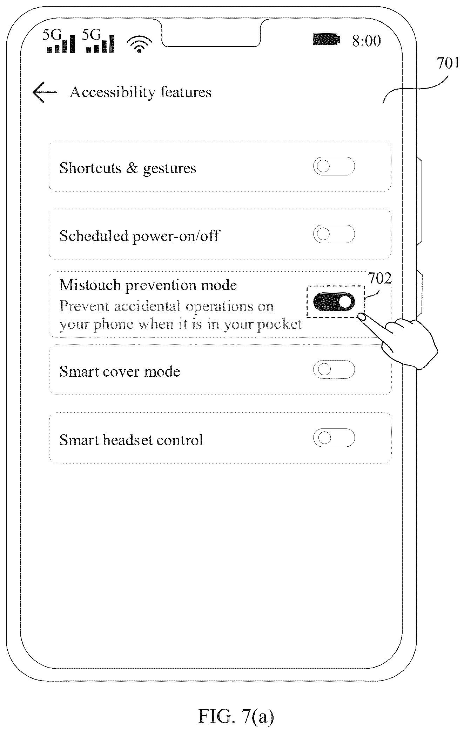

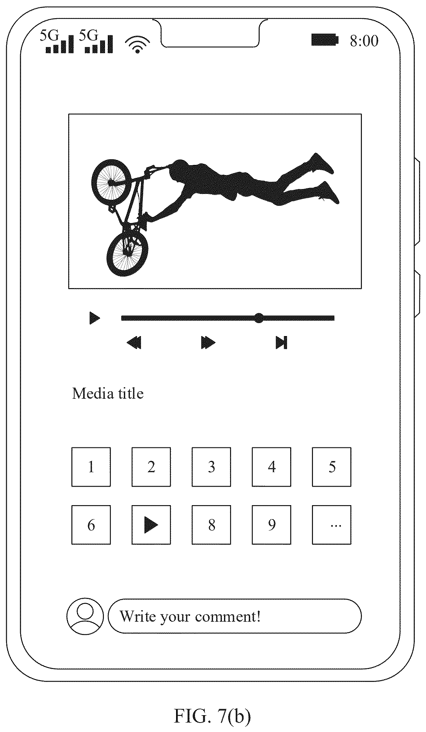

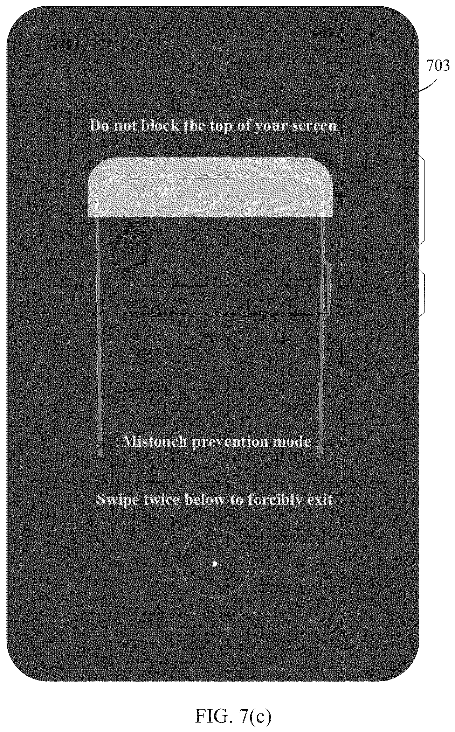

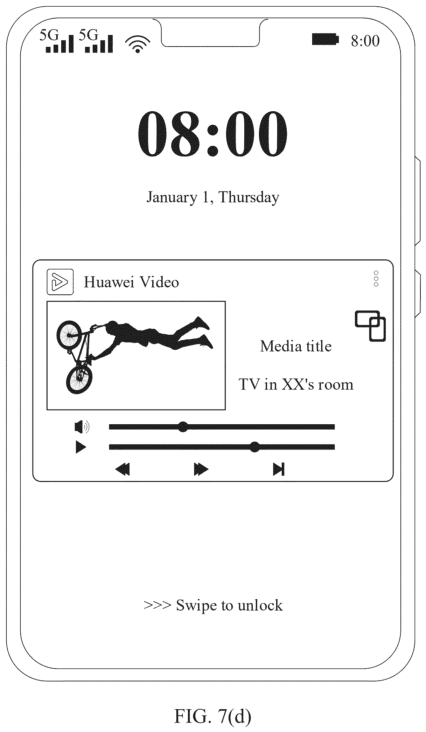

For example, as shown in FIG. 7(a), the user may find an Accessibility features option on a Settings interface of the terminal device, open an Accessibility features interface 701, and choose to enable the mistouch prevention mode 702 on the Accessibility features interface 701. For example, the user is watching a video by using the mobile phone, as shown in FIG. 7(b), and suddenly puts the mobile phone in the non-lock-screen-state into a trousers pocket upon an emergency. Within first duration (less than the preset duration) in which the mobile phone is put into the trousers pocket, the mobile phone generates a mistouch prevention interface 703, as shown in FIG. 7(c). The first duration is duration in which the mobile phone is in the pocket. If the user takes the mobile phone out of the pocket within a time period less than the preset duration, the mobile phone automatically exits the mistouch prevention mode, as shown in FIG. 7(d). The user may directly use the mobile phone to continue to watch the video without unlocking.

In another scenario, a fingerprint unlock button is provided on a side of some terminal devices (for example, a mobile phone). The fingerprint unlock button provides convenience for a user to unlock the terminal. However, in some scenarios, mis-unlock is likely to occur. For example, although the user has locked a screen of the terminal device before putting the terminal device into a pocket, the user may accidentally touch the fingerprint unlock button when putting the terminal device into the pocket, and consequently, the terminal device in a lock-screen state is accidentally unlocked. In this scenario, the terminal device may also detect, by using the method 300 or the method 500, whether the terminal device has a pocketing action after being unlocked. If a pocketing action occurs, the terminal device performs in-pocket detection. When duration in which the terminal device is in the pocket is less than the preset duration, the terminal device may temporarily enter a mistouch prevention state (or temporarily pull up a mistouch prevention mode) within the duration.

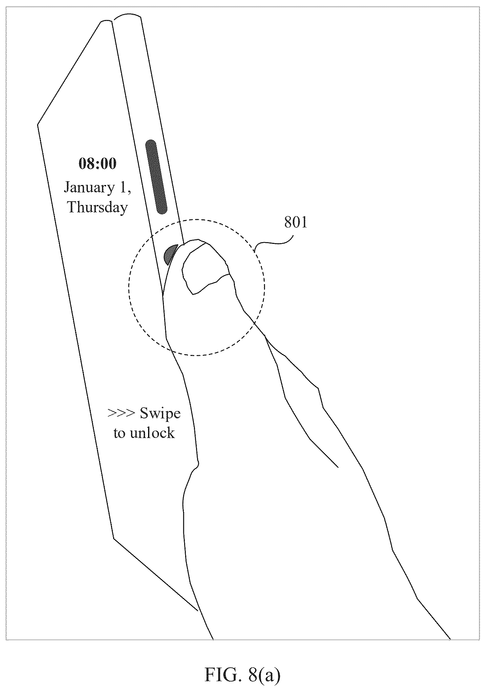

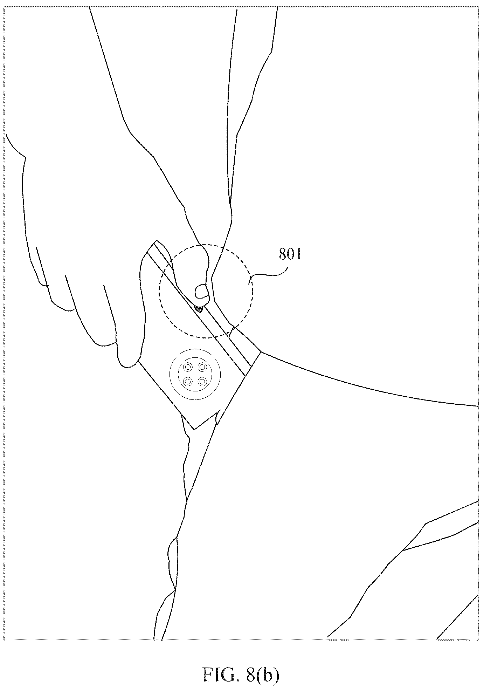

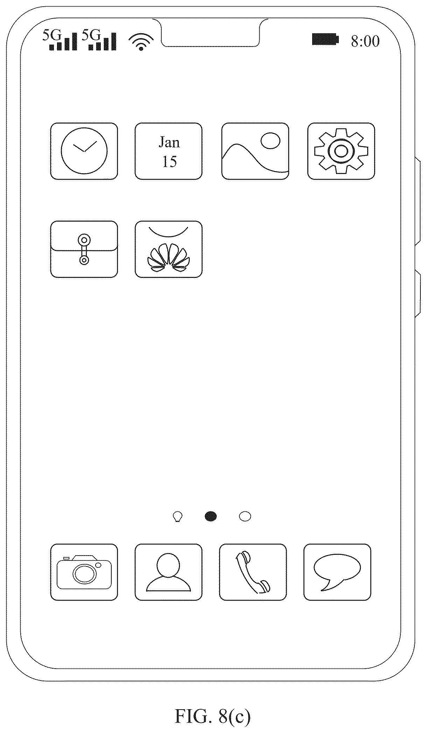

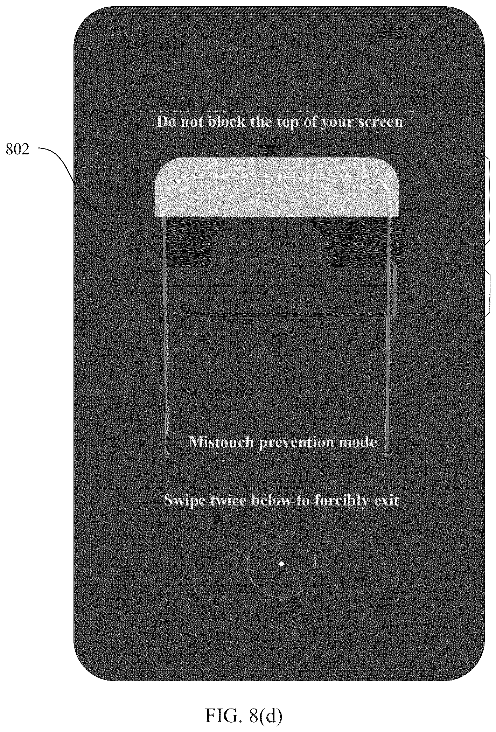

For example, a fingerprint unlock button 801 is provided on a side of the mobile phone, as shown in FIG. 8(a). The user may perform fingerprint unlock on the mobile phone in a lock-screen state by using the fingerprint unlock button 801. For example, as shown in FIG. 8(b), when using the mobile phone, the user locks a screen of the mobile phone and then puts the mobile phone into a pocket. When putting the mobile phone into the pocket, the user accidentally touches the fingerprint unlock button 801 to unlock the mobile phone in the lock-screen state, and the mobile phone returns to an unlocked state, as shown in FIG. 8(c). In this case, the mobile phone determines, according to the method 300 or the method 500, whether the mobile phone in the unlocked state is in a pocket. When detecting that the mobile phone is in a pocket, the mobile phone continues to detect duration in which the mobile phone is in the pocket. In a period of time in which the duration is less than the preset duration, the mobile phone may temporarily generate a mistouch prevention interface 802, as shown in FIG. 8(d), to prevent mistouch on a touchscreen of the mobile phone. If the user takes the mobile phone out of the pocket within a time period less than the preset duration and an optical proximity sensor of the mobile phone is in a non-blocked state, the mobile phone may automatically exit a mistouch prevention mode.

It can be learned that, in some scenarios (for example, the user temporarily puts the terminal like the mobile phone in a trousers pocket when washing hands), the user does not want the terminal device to enter the lock-screen state. In this case, the terminal device may record duration in which the terminal is in the pocket. In a period of time in which the duration is less than the preset duration (for example, 1s), the terminal device may temporarily enter the mistouch prevention state instead of the lock-screen state. In this way, even if the user takes the terminal device out of the pocket within a short time, the user can continue to use the terminal device without unlocking. This is convenient and secure.

In some embodiments, after the terminal device is in the mistouch prevention state within the duration, the method 300 (or the method 500) further includes: when the status of the optical proximity sensor of the terminal device is the non-blocked state, exiting the mistouch prevention state.

When the terminal device is in a pocket, the terminal device may detect the status of the optical proximity sensor in real time or at intervals of preset time. The status of the optical proximity sensor being the non-blocked state indicates that the user may have taken the terminal device out of the pocket. In this case, the terminal device may automatically exit the mistouch prevention state, and restore to the non-lock-screen state (or the unlocked state), so that the user can continue to use the terminal device without unlocking. This achieves good user experience.

In some other embodiments, after the terminal device is in the mistouch prevention state within the duration, the method 300 (or the method 500) further includes: when the current posture of the terminal device is a posture in which the top of the touchscreen faces up, exiting the mistouch prevention state.

When the terminal device is in a pocket, the top of the touchscreen of the terminal device may be horizontal or may be toward the direction of gravity. The terminal device may obtain a detected value of the attitude sensor in real time or at intervals of preset time. The terminal device determining, based on the detected value of the attitude sensor, that the current posture is the top of the touchscreen facing up (or the top of the touchscreen being higher than the bottom) indicates that the terminal device may have been taken out of the pocket. In this case, the terminal device may automatically exit the mistouch prevention state, so that the user can continue to use the terminal device.

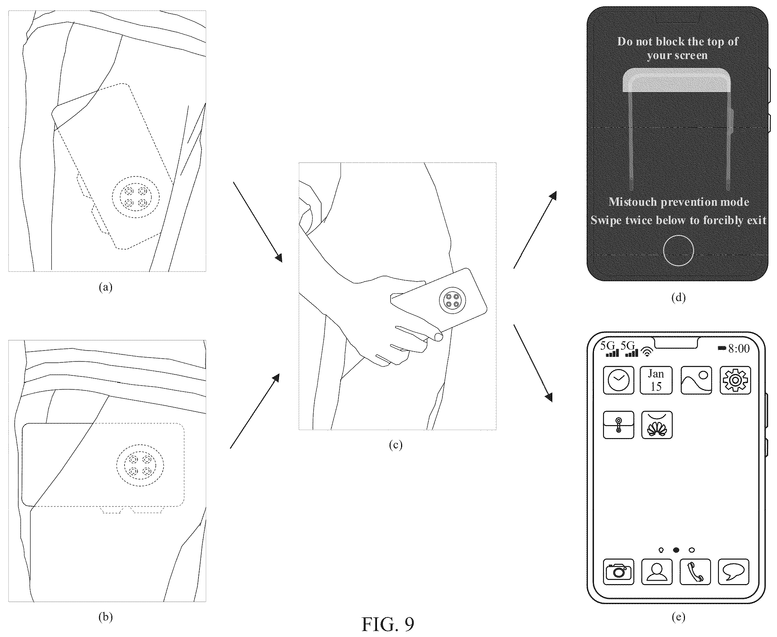

For example, when the terminal device is in a trousers pocket, a mistouch prevention interface is temporarily generated (or temporarily pulled up) on the touchscreen of the terminal device, as shown in (d) in FIG. 9. When the terminal device is in the trousers pocket, the top of the touchscreen may be placed toward the direction of gravity, as shown in (a) in FIG. 9; or may be placed in a horizontal direction, as shown in (b) in FIG. 9. When the user takes the terminal device out of the trousers pocket, the terminal device determines, based on the detected value of the attitude sensor, that the current posture of the terminal device is the top of the touchscreen facing up, as shown in (c) in FIG. 9. In this case, the terminal device switches from the mistouch prevention state (as shown in (d) in FIG. 9) to the unlocked state, as shown in (e) in FIG. 9, so that the user can continue to use the terminal device.

In some embodiments, after the terminal device is in the mistouch prevention state within the duration, the method 300 (or the method 500) further includes: when the terminal device leaves the pocket, exiting the mistouch prevention state in response to a gesture operation of the user.

When the terminal device is in a pocket, the terminal device is in the mistouch prevention state. If the user takes the terminal device out of the pocket, the user may perform a gesture operation (for example, quickly swipe up twice) on the touchscreen to enable the terminal device to exit the mistouch prevention state and restore to the unlocked state, so that the user can continue to use the terminal device. This operation of exiting the mistouch prevention state supports exiting according to a user requirement, and is convenient and flexible, with good user experience.

It should be noted that the gesture operation may be a mid-air gesture, a touch gesture, a floating gesture, or the like. For example, the gesture operation is a touch gesture operation, and the touch gesture operation may include but is not limited to one of a slide operation, a tap operation, or a press operation. For example, the slide operation may be a fast left-slide operation, a fast right-slide operation, or a slow left-slide operation, the tap operation may be a single-tap operation or a double-tap operation, and the press operation may be a short-press operation or a press-and-hold operation.

In some embodiments, the method 300 (or the method 500) further includes: The terminal device switches from the mistouch prevention state to the lock-screen state when the duration is greater than or equal to the preset duration.

When the terminal device is in a pocket, the terminal device continuously records duration in which the terminal device is in the pocket. The duration being greater than or equal to the preset duration indicates that the user may not temporarily put the terminal device into the pocket. To prevent mistouch on the terminal device in the pocket, the terminal device enables the auto-screen-lock function, to switch the terminal device from the temporary mistouch prevention state to the lock-screen state, to turn off the touchscreen, reduce power consumption of the terminal, and avoid mistouch.

It should be noted that the pocket in this application may be a trousers pocket, or a jacket pocket, an outer backpack pocket, or the like. In this application, the trousers pocket is merely used as an example to describe the method for performing in-pocket detection, and this should not be construed as a limitation on a scope of pockets to which this application is applicable.

The foregoing describes in detail examples of the method for performing in-pocket detection in this application. It can be understood that, to implement the foregoing functions, a terminal device includes a corresponding hardware structure and/or software module for performing the functions. Persons skilled in the art should easily be aware that, in combination with units and algorithm steps in the examples described in embodiments disclosed in this specification, this application can be implemented by hardware or a combination of hardware and computer software. Whether a function is performed by hardware or hardware driven by computer software depends on particular applications and design constraints of the technical solutions. Persons skilled in the art may use different methods to implement the described functions for each particular application. However, it should not be considered that the implementation goes beyond the scope of this application. In this application, functional units for the method for performing in-pocket detection are divided based on the foregoing method examples. For example, each functional unit is obtained through division based on each function, or two or more functions may be integrated into one unit. The integrated unit may be implemented in a form of hardware, or may be implemented in a form of a software functional unit. It should be noted that, in this application, division into the units is an example, and is merely logical function division. During actual implementation, another division manner may be used.

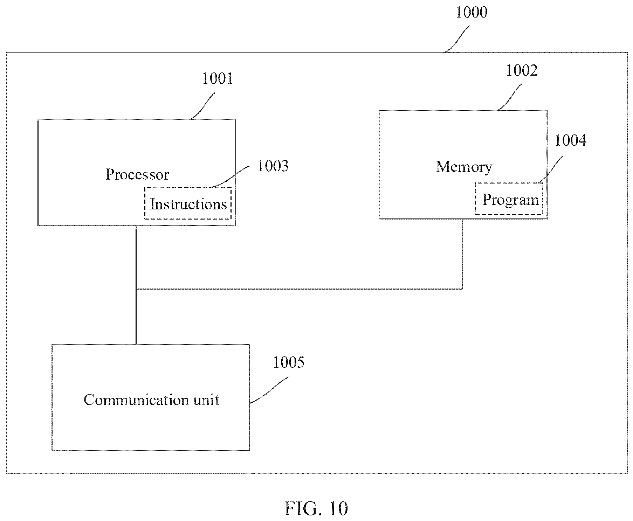

FIG. 10 is a diagram of a structure of a terminal device according to this application. A dashed line in FIG. 10 indicates that the unit or the module is optional. The terminal device 1000 may be configured to implement the methods described in the foregoing method embodiments. The terminal device 1000 may be a terminal device, or may be a server or a chip (system).

The terminal device 1000 includes one or more processors 1001. The one or more processors 1001 may support the terminal device 1000 in implementing the method in the method embodiment corresponding to FIG. 3 or FIG. 5. The processor 1001 may be a general-purpose processor or a dedicated processor. For example, the processor 1001 may be a central processing unit (Central Processing Unit, CPU). The CPU may be configured to control the terminal device 1000, execute a software program, and process data of the software program. The terminal device 1000 may further include a communication unit 1005, configured to implement signal input (receiving) and output (sending).

The terminal device 1000 may be a chip (system). The chip (system) includes a memory and a processor. The processor is configured to execute a computer program stored in the memory, to implement the methods shown in the foregoing embodiments.

The communication unit 1005 may be an input and/or output circuit of the chip (system), or the communication unit 1005 may be a communication interface of the chip (system). The chip (system) may be a component of the terminal device 1000.

For another example, the communication unit 1005 may be a transceiver of the terminal device 1000, or the communication unit 1005 may be a transceiver circuit of the terminal device 1000. The terminal device 1000 may include one or more memories 1002. The memory 1002 stores a program 1004. The program 1004 may be run by the processor 1001 to generate instructions 1003, to enable the processor 1001 to perform, according to the instructions 1003, the methods described in the foregoing method embodiments. Optionally, the memory 1002 may further store data. Optionally, the processor 1001 may further read the data stored in the memory 1002. The data and the program 1004 may be stored at a same storage address, or the data and the program 1004 may be stored at different storage addresses.

The processor 1001 and the memory 1002 may be disposed separately, or may be integrated together, for example, integrated on a system-on-a-chip (System-On-a-Chip, SOC) of the terminal device. For a specific manner of performing the in-pocket detection method by the processor 1001, refer to related descriptions in the method embodiments.

It should be understood that the steps in the foregoing method embodiments may be performed by a logic circuit in a hardware form or instructions in a software form in the processor 1001. The processor 1001 may be a CPU, a digital signal processor (Digital Signal Processor, DSP), a field programmable gate array (Field Programmable Gate Array, FPGA), or another programmable logic device, for example, a discrete gate, a transistor logic device, or a discrete hardware component.

This application further provides a computer program product. When the computer program product is executed by a processor 1001, the method according to any one of the method embodiments of this application is implemented. The computer program product may be stored in a memory 1002. For example, the computer program product is a program 1004. After undergoing processing processes such as preprocessing, compilation, assembly, and linking, the program 1004 is finally converted into an executable target file that can be executed by the processor 1001.

This application further provides a computer-readable storage medium. The computer-readable storage medium stores a computer program. When the computer program is executed by a computer, the method according to any one of the method embodiments of this application is implemented. The computer program may be a high-level language program or an executable target program.

The computer-readable storage medium is, for example, a memory 1002. The memory 1002 may be a volatile memory or a non-volatile memory, or the memory 1002 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and serves as an external cache. By way of example but not limitative description, RAMs in many forms may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (SynchLink DRAM, SLDRAM), and a direct rambus random access memory (Direct Rambus RAM, DRRAM).

It can be clearly understood by persons skilled in the art that, for ease and brevity of description, for specific operating processes and achieved technical effects of the foregoing apparatuses and devices, reference may be made to corresponding processes and technical effects in the foregoing method embodiments. Details are not described herein again.

In the several embodiments provided in this application, the disclosed systems, apparatuses, and methods may be implemented in other manners. For example, some features of the method embodiments described above may be ignored or not performed. The described apparatus embodiments are merely examples. Division into the units is merely logical function division. During actual implementation, another division manner may be used. For example, a plurality of units or components may be combined or integrated into another system. In addition, coupling between the units or coupling between the components may be direct coupling or indirect coupling, and the coupling may include an electrical connection, a mechanical connection, or a connection in another form.

The foregoing embodiments are merely intended to describe the technical solutions of this application, but not to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions in embodiments of this application. These modifications and replacements shall fall within the protection scope of this application.

Finally, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A method for performing in-pocket detection, applied to a terminal device comprising a touchscreen, wherein the method comprises:
detecting an acceleration waveform of the terminal device in a movement direction when the touchscreen is in a non-lock-screen state;
determining an included angle between the movement direction and a direction of gravity when a peak of the acceleration waveform is greater than a first preset value and a full-duration-at-half-maximum of the acceleration waveform is within a preset range; and
performing in-pocket detection when the included angle is less than a preset included angle.

2. The method according to claim 1, wherein before performing in-pocket detection, the method further comprises:
detecting a current posture of the terminal device; and
performing in-pocket detection when the included angle is less than the preset included angle comprises:
performing in-pocket detection when the current posture is a target posture and the included angle is less than the preset included angle, wherein the target posture is a posture in which the top of the touchscreen faces down.

3. A method for performing in-pocket detection, applied to a terminal device comprising a touchscreen, wherein the method comprises:
determining an included angle between a movement direction of the terminal device and a direction of gravity when the touchscreen is in a non-lock-screen state;
detecting an acceleration waveform of the terminal device in the movement direction when the included angle is less than a preset included angle; and
performing in-pocket detection when a peak of the acceleration waveform is greater than a first preset value and a full-duration-at-half-maximum of the acceleration waveform is within a preset range.

4. The method according to claim 3, wherein before performing in-pocket detection, the method further comprises:
detecting a current posture of the terminal device; and
performing in-pocket detection when the peak of the acceleration waveform is greater than the first preset value and the full-duration-at-half-maximum of the acceleration waveform is within the preset range comprises:
performing in-pocket detection when the current posture is a target posture, the peak of the acceleration waveform is greater than the first preset value, and the full-duration-at-half-maximum of the acceleration waveform is within the preset range, wherein the target posture is a posture in which the top of the touchscreen faces down.

5. The method according to any one of claims 1 to 4, wherein performing in-pocket detection comprises:
obtaining N capacitance differences on the touchscreen, wherein the N capacitance differences are absolute values of differences between N raw capacitance values and a standard capacitance value, and N is a positive integer greater than 1;
determining M capacitance differences from the N capacitance differences, wherein the M capacitance differences are capacitance differences greater than a capacitance threshold, and M is a positive integer less than N;
when M is greater than a second preset value, clustering the M capacitance differences to obtain at least one clustering result; and
processing the at least one clustering result by using a classifier, and determining whether the terminal device is in a pocket, wherein an output result of the classifier indicates whether the terminal device is in a pocket.

6. The method according to any one of claims 1 to 4, wherein performing in-pocket detection comprises:
detecting a status of an optical proximity sensor of the terminal device; and
if the status is a blocked state, determining that the terminal device is in a pocket.

7. The method according to any one of claims 1 to 6, wherein when the terminal device is in a pocket, the method further comprises:
entering a lock-screen state.

8. The method according to claim 7, wherein before entering the lock-screen state, the method further comprises:
recording duration in which the terminal device is in the pocket; and
being in a mistouch prevention state within the duration when the duration is less than preset duration.

9. The method according to claim 8, wherein after being in the mistouch prevention state within the duration, the method further comprises:
when the status of the optical proximity sensor of the terminal device is a non-blocked state, exiting the mistouch prevention state.

10. The method according to claim 8, wherein after being in the mistouch prevention state within the duration, the method further comprises:
when the current posture of the terminal device is a posture in which the top of the touchscreen faces up, exiting the mistouch prevention state.

11. The method according to claim 8, wherein after being in the mistouch prevention state within the duration, the method further comprises:
when the terminal device leaves the pocket, exiting the mistouch prevention state in response to a gesture operation of a user.

12. The method according to any one of claims 8 to 11, wherein the method further comprises:
switching from the mistouch prevention state to the lock-screen state when the duration is greater than or equal to the preset duration.

13. A terminal device, wherein the terminal device comprises a processor and a memory, the memory is configured to store a computer program, and the processor is configured to invoke the computer program from the memory and run the computer program, to enable the terminal device to perform the method according to any one of claims 1, 2, and 5 to 12, or enable the terminal device to perform the method according to any one of claims 3 to 12.

14. A computer-readable storage medium, wherein the computer-readable storage medium stores a computer program, and when the computer program is executed by a processor, the processor is enabled to perform the method according to any one of claims 1, 2, and 5 to 12, or the processor is enabled to perform the method according to any one of claims 3 to 12.

15. A chip system, wherein the chip system comprises a memory and a processor, and the processor is configured to execute a computer program stored in the memory, to implement the method according to any one of claims 1, 2, and 5 to 12, or implement the method according to any one of claims 3 to 12.
